# EUROPEAN PATENT SPECIFICATION

(11) **EP 3 297 004 B1**
(45) Date of publication and mention of the grant of the patent: **08.04.2020**
(21) Application number: 16189078.5
(22) Date of filing: 15.09.2016
(51) Int. Cl.: H01F 7/122, F16K 31/08, F16K 31/06, H01F 7/14

(54) **ELECTROMAGNETIC ACTUATOR WITH ROCKING ARMATURE**
ELEKTROMAGNETISCHER AKTUATOR MIT SCHAUKELNDER ARMATUR
ACTIONNEUR ELECTROMAGNETIQUE A VOLET BASCULANT

(43) Date of publication of application: 21.03.2018
(73) Proprietor: FAS MEDIC S.A., 1607 Palézieux (CH)
(72) Inventor: Alvarez, Raphaël, 1260 Nyon (CH); Tanari, Vincent, 1242 Satigny (CH)
(74) Representative: Edson, Russell Gregory

(56) References cited:
- WO-A1-2004/104462
- WO-A1-2008/011886
- WO-A1-2015/047343
- US-A- 4 621 660
- US-A1- 2005 279 300

## Description

### Field of the invention

The present invention relates to electromagnetic actuators. In particular, the invention relates to an electromagnetic actuator with a rocking armature for controlling a fluid control valve.

### Background

It is known to use electromagnetic actuators in valves. One example of such a valve includes an electromagnetic actuator having an armature, which may be used to control fluid flow through a series of openings. The armature can be moved into various positions to block, or divert, fluid flow by blocking one or more of the openings.

One known electromagnetic actuator comprises a coil, an armature and one or more springs. The actuator is operated by applying a potential difference across the coil, which establishes a current in the coil and in turn generates a magnetic field. The magnetic field causes magnetisation of part of the armature and causes the armature to move from a first position to a second position. A spring can be used to bias the armature towards the first position or away from the second position, such that upon removal of the magnetic field, the armature returns to the first position. Such mechanisms require multiple moving parts and can require a holding current to hold the armature in the second position. Document WO2008/011886 A1 discloses a bi-stable solenoid valve having a rocker-type magnetic valve member, an electric magnetic device and a three-pole permanent magnetic holding plate extending between the electric magnetic device and the valve member.

There is a need for improvement upon such electromagnetic actuators.

### Statements of Invention

According to an aspect of the invention, there is provided an actuator comprising: a non-permanent magnetisable element; one or more permanent magnets; and an armature having a first end and a second end, and a pivot axis between the first and second ends, wherein the armature is pivotable about the pivot axis between: a first position in which the armature is retained by a first magnetic circuit including at least one of the one or more permanent magnets and the armature; and a second position in which the armature is retained by a second magnetic circuit including at least one of the one or more permanent magnets and the armature, wherein the non-permanent magnetisable element is configured such that it can be actuated to generate an opposing magnetic circuit to oppose the first and/or second magnetic circuit to move the armature from one of the first and second positions to the other of the first and second positions, wherein the non-permanent magnetisable element is configured to generate a first non-permanent magnetic flux in the armature on a first side of the pivot axis and a second non-permanent magnetic flux in the armature on a second side of the pivot axis, the first non-permanent magnetic flux being in an opposite direction to the second non-permanent magnetic flux.

The first magnetic circuit may comprise the armature, a permanent magnet of the one or more permanent magnets, and a magnetically soft circuit element. The second magnetic circuit may comprise the armature, a permanent magnet of the one or more permanent magnets, and a magnetically soft circuit element.

The magnetically soft circuit element of the first magnetic circuit may be a first part of a magnetically soft circuit element and the magnetically soft circuit element of the second magnetic circuit may be a second part of the same magnetically soft circuit element. The first magnetic circuit and the second magnetic circuit may each comprise at least a portion of a single magnetically soft circuit element. The magnetically soft circuit element may be a single unitary piece. The magnetically soft circuit element of the first magnetic circuit may be a first magnetically soft circuit element and the magnetically soft circuit element of the second magnetic circuit may be a second magnetically soft circuit element, such that the first and second magnetically soft circuit elements are separate pieces. First and second parts of the magnetically soft circuit element may therefore be separate pieces, or may otherwise be parts of the same element in all of the following examples. The at least one permanent magnet of the one or more permanent magnets may be common to both the first and second magnetic circuits.

The non-permanent magnetisable element may surround a magnetisable core. The non-permanent magnetisable element may be a coil. The magnetisable core may be disposed at least partly within the non-permanent magnetisable element.

The permanent magnet may be located in the core. The permanent magnet may be located between the non-permanent magnetisable element and the armature. The first magnetic circuit may comprise a first permanent magnet and the second magnetic circuit may comprise a second permanent magnet. The first permanent magnet and the second permanent magnet may be disposed within the armature. The first permanent magnet may be disposed between the armature and the first part of the magnetically soft circuit element, and the second permanent magnet may be disposed between the armature and the second part of the magnetically soft circuit element. The first permanent magnet may be disposed within the first part of the magnetically soft circuit element and the second permanent magnet is disposed within the second part of the magnetically soft circuit element.

The first magnetic circuit may comprise first and second permanent magnets and the second magnetic circuit may comprise first and second permanent magnets. The first and second permanent magnets of at least one of the first and second magnetic circuits may be spaced from one another in the magnetic circuit.

The first permanent magnet may be disposed between the first part of the magnetically soft circuit element and the core and the second permanent magnet may be disposed between the second part of the magnetically soft circuit element and the core. The first and the second permanent magnets may be between the non-permanent magnetisable element and the armature. The non-permanent magnetisable element may be between the first and second permanent magnets and the armature.

Pivoting of the armature about the pivot line may involve rotation of the armature about the pivot line. In the first position, the first end of the armature may be in contact with or close to the first part of the magnetically soft circuit element, and in the second position, the second end of the armature may be in contact with or close to the second part of the magnetically soft circuit element.

The term "close to" used herein with reference to the first end of the armature relative to the first part of the magnetically soft circuit element, means that the first end of the armature is closer to the first part of the magnetically soft element than it would be when the armature is in an intermediate or second latched position. The term "close to" used herein with reference to the second end of the armature relative to the second part of the magnetically soft circuit element, means that the second end of the armature is closer to the second part of the magnetically soft element than it would be when the armature is in an intermediate or first latched position.

The first end of the armature may be close to the first part of the magnetically soft circuit element when a gap defined between the first end of the armature and the first part of the magnetically soft circuit element is smaller than a gap defined between the second end of the armature and the second part of the magnetically soft circuit element. In this case, the first end of the armature is not close to the first part of the magnetically soft circuit element when a gap defined between the first end of the armature and the first part of the magnetically soft circuit element is equal to or larger than a gap defined between the second end of the armature and the second part of the magnetically soft circuit element. The meaning of the term "close to" may be interpreted in a corresponding manner for the armature second end relative to the second part of the magnetically soft circuit element.

The first end of the armature may be close to the first part of the magnetically soft circuit element when the first magnetic circuit enables a more concentrated flux to be set up through it than the second magnetic circuit. In this case, the first end of the armature is not considered close to the first part of the magnetically soft circuit element when the magnetic flux concentration that can be set up in the first magnetic circuit is equal to or less than the magnetic flux concentration that can be set up in the second magnetic circuit. The meaning of the term "close to" may be interpreted in a corresponding manner for the armature second end relative to the second part of the magnetically soft circuit element.

The first end of the armature may be close to the first part of the magnetically soft circuit element when a force acting on the first end of the armature from the first magnetic circuit is larger than a force acting on the second end of the armature from the second magnetic circuit. In this case, the first end of the armature may not be close to the first part of the magnetically soft circuit element when a force acting on the armature first end is equal to or less than a force acting on the armature second end from the second magnetic circuit. The meaning of the term "close to" may be interpreted in a corresponding manner for the armature second end relative to the second part of the magnetically soft circuit element.

The magnetically soft circuit element or elements of the first and second magnetic circuits may together define a cylinder, the cylinder surrounding the non-permanent magnetisable element. The permanent magnet may define a toroid.

The armature may comprise a material with a positive magnetic susceptibility. The armature may comprise steel, preferably a steel comprising a ferritic or martensitic phase.

There may be provided a valve comprising the electromagnetic actuator as described above.

The valve may be a 2 port valve. The actuator may be configured to actuate at least one seating means of the valve to open a fluid path between a first port and a second port in one of the first and second positions, and to close the fluid path between the first port and the second port in the other of the first and second positions.

The valve may be a 3 port valve. The actuator may be configured to actuate at least one seating means of the valve to open a fluid path between a first port and a second port in one of the first and second positions, and to open a fluid path between the first port and a third port in the other of the first and second positions. Moving between the first and second positions may close the previously open fluid path.

### Brief Description of the Figures

Figure 1 shows a cross-section through a valve comprising an electromagnetic actuator according to the present invention;
Figure 2 shows a perspective view of the actuator of the valve of figure 1;
Figure 3 shows part of an electromagnetic actuator of the present invention, with an armature in a second latched position;
Figure 4 shows the part of the electromagnetic actuator of figure 4, with the armature about to move to a first latched position;
Figure 5 shows part of an electromagnetic actuator of the present invention, with an armature in a first latched position, about to move to a second latched position; and
Figures 6 to 14 show further alternative embodiments of an electromagnetic actuator according to the present invention.

### Detailed Description of Preferred Embodiments

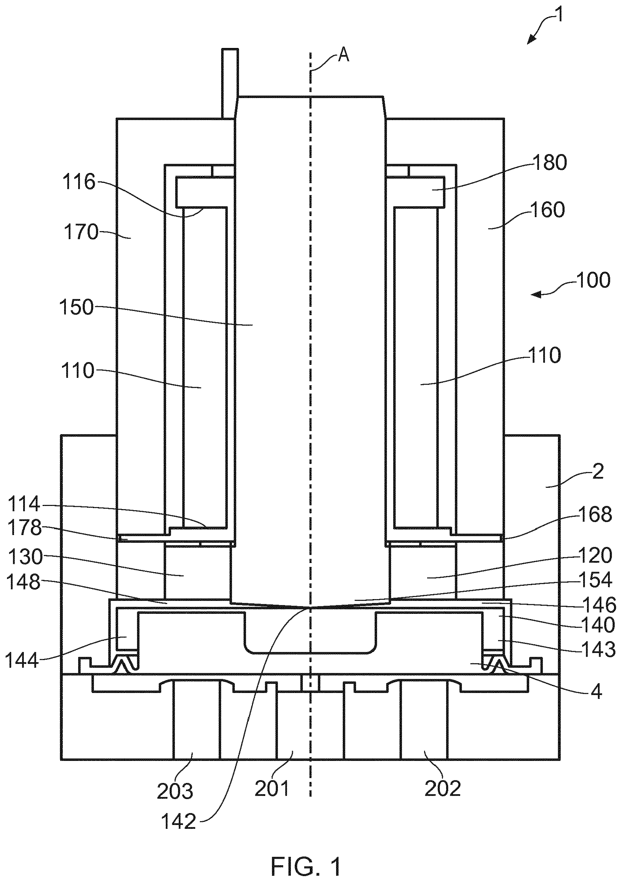

The valve 1 shown by the schematic illustration in figure 1 has an electromagnetic actuator 100, a membrane 4, and a valve body 2.

The electromagnetic actuator 100 has a non-permanent magnetisable element 110, a first permanent magnet 120, a second permanent magnet 130, and an armature 140. The electromagnetic actuator 100 may also have one or more of a magnetic core 150, a magnetically soft circuit element having a first part 160and a second part 170, and a bobbin 180, around which the non-permanent magnetisable element 110 may be wound.

The non-permanent magnetisable element 110 may be a coil. The coil 110 may be substantially helical, but a skilled reader will appreciate that a coil can have other similar or substantially helical forms. The coil 110 may comprise one winding or a plurality of windings. Further, the coil 110 may define a cylinder which has a longitudinal axis A, as shown in figure 1. The longitudinal axis A may extend from a first end 114 of the coil 110 to a second end 116 of the coil 110. The coil 110 is not limited to defining a circular cross section, but may, for example, define a cuboid or any other shape.

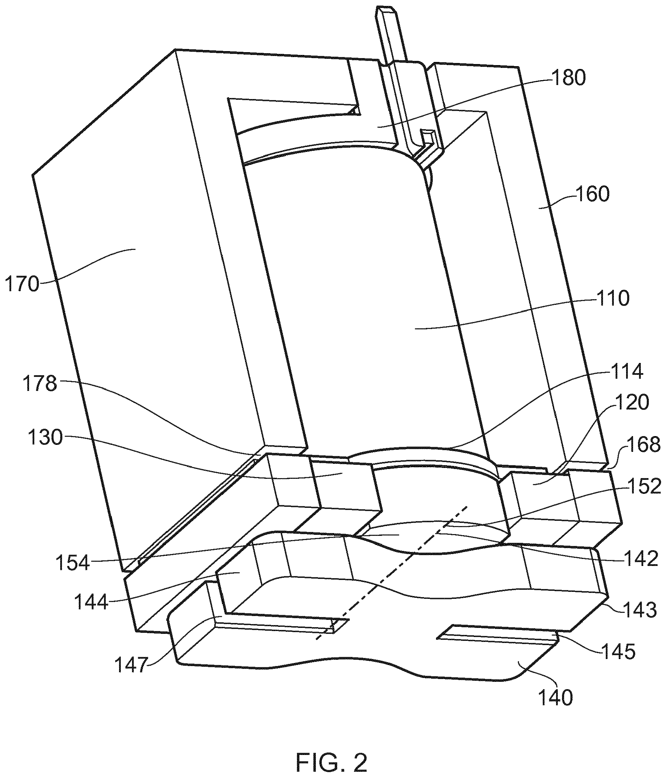

The first permanent magnet 120 and the second permanent magnet 130 may be the same as each other, but may be of different forms or sizes. Each permanent magnet 120, 130 may be substantially rectangular (best seen in figure 2). Each permanent magnet 120, 130, may comprise a ferromagnetic material, comprising iron, nickel, cobalt, an alloy of these, or iron oxide. It should be appreciated that this list is not exhaustive, and that the permanent magnet or magnets may comprise any suitable material. Each permanent magnet may be a hard magnet. The term "hard magnet" refers to the coercivity and remanence values of the material comprised in the permanent magnet. By way of example, "hard" magnets may have a coercivity of more than 10000 A/m. "Hard" magnets may have remanence values of at least half of their saturation magnetisation. As will be appreciated by a skilled person, it is possible to have more or less than two permanent magnets. Various other combinations of permanent magnets may be beneficial, as will be described later with reference to the accompanying figures.

The armature 140 is preferably substantially planar, and in a general sense it has first and second ends 143, 144, and a body extending therebetween. The armature 140 may have a pivot line 142 (best seen in figure 2), which is a line at which it engages a pivot. The armature 140 may be adapted to pivot about the pivot line 142. The armature 140 may have a first slot 145 and a second slot 147. The first and second slots 145, 147 may be adapted to receive a portion of a membrane 4. This may provide a reliable connection between the armature 140 and a membrane 4. The armature 140 and the membrane 4 may be attached by any other attachment means without the need for slots 145, 147 in the armature. As will be appreciated by a skilled person, there exist a variety of suitable attachment means which do not require the armature 140 to have slots 145, 147. For example, the armature 140 may be attached to a membrane 4 by over-moulding the membrane 4 onto the armature 140. The armature 140 can be arranged to pivot about a pivot line or point 142 on the core 150. The membrane 4 may act as a barrier to separate a fluid flowing in the ports 201 to 203 from the actuator 100 of the valve 1. As such the medium flowing through the valve is separated from the actuator 100. This type of valve arrangement can be termed a 'medium separated valve'. As such, the actuator may be arranged on a first side of the membrane and the fluids paths and ports of the valve located to a second side of the membrane to prevent fluid flow to the actuator. Any or all of the parts of the actuator can therefore be potentially separable from the valve body 2 and/or the membrane 4 so that the actuator can be maintained or replaced without interference with the valve body 2 and without removal of the membrane 4.

The valve body 2 may have a plurality of ports. As will be appreciated, when the second end 144 of the armature is biased towards the third port 203, the membrane 4 will seal the third port 203 and the second port 202 will be open to the first port 201. Conversely, when the first end 143 of the armature is biased toward the second port 202, the second port will be closed and the third port 203 will be open to fluid flow from the first port 201. A valve having such an arrangement of 3 ports with 2 possible flow paths between subsets of the three ports can be termed a 3/2 valve. As will be appreciated, the actuator 100 described herein can be applied to valves having other arrangements of ports and flow paths which may be opened and/or closed by pivoting of the armature between first and/or second positions. For example, the actuator 100 described herein may be applied to a 2 port valve.

The illustrated core 150 is substantially cylindrical, but any elongate form extending within coil 110 may be suitable where different overall sizes of forms of actuator are desired. The core 150 may have a contact end 154. The contact end 154 may provide an apex against which the armature 140 rests and about which the armature 140 may pivot. The contact end 154 may be tapered toward a line 152, or may simply be curved to provide the apex.

The first and second parts of the magnetically soft circuit element 160, 170, are configured to carry magnetic flux from one end of the core 150 and/or coil 110 to an opposite end of the core 150 and/or coil 110, to establish a magnetic circuit including the core 150 and/or coil 110. The first and second parts of the magnetically soft circuit element 160, 170 may be substantially the same as each other. The first and second parts of the magnetically soft circuit element 160, 170 may be substantially elongate, such that they have a longitudinal dimension. The first and second parts of the magnetically soft circuit element 160, 170 may each define an L-shape, as shown in figure 1, but may also define any appropriate shape. The first and second parts of the magnetically soft circuit element 160, 170 comprise a soft magnetic material, which may establish, enhance or guide a magnetic flux when subjected to a magnetic field. For example, the first and second parts of the magnetically soft circuit element may establish a magnetic flux parallel to the longitudinal dimension, through the magnetically soft circuit element when the coil 110 is activated. The first and second parts of the magnetically soft circuit element 160, 170 may each have a gap 168, 178 to receive a part of a bobbin 180. The gap 168, 178 may act as an air gap to reduce the magnetic flux concentration through the respective first and second parts of the magnetically soft circuit element 160, 170. These gaps 168, 178 can be termed auxiliary magnetic circuit gaps.

The core 150 may be disposed at least partially inside the coil 110, such that the coil 110 at least partially surrounds the core 150. The coil 110 may share the axis A with the core 150, such that the coil 110 and the core 150 are substantially co-axial.

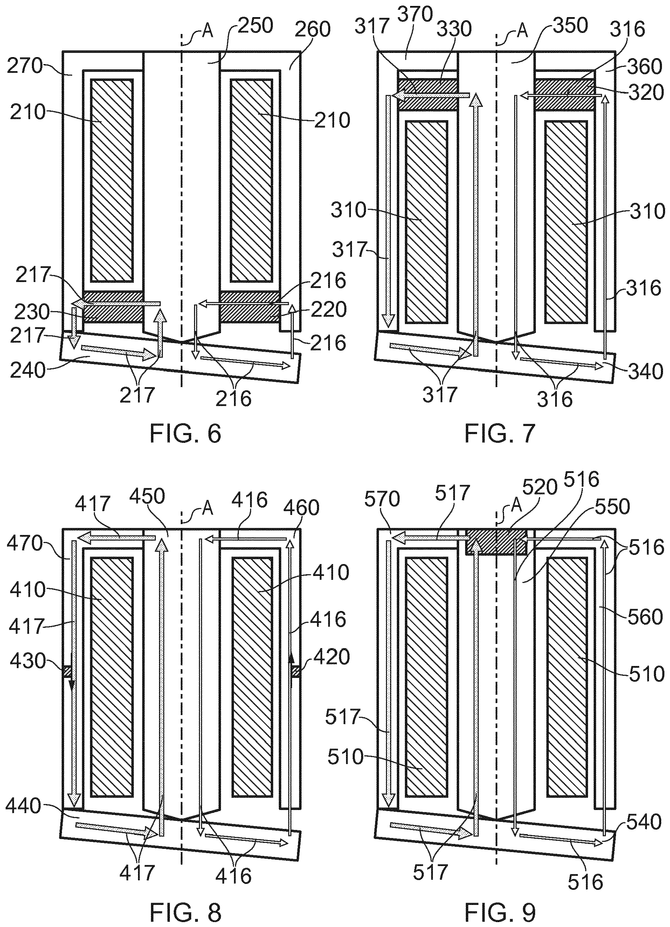

The first permanent magnet 120 and the second permanent magnet 130 may be disposed adjacent the second end 114 of the coil 110, but can be provided in other locations, as will be described in later embodiments, with reference to figures 6 to 14.

The first part of the magnetically soft circuit element 160 may be disposed at a first side of the axis A, and the second part of the magnetically soft circuit element 170 may be disposed at a second side of the axis A. The first and second parts of the magnetically soft circuit element 160, 170 may substantially surround the coil 110 and the core 150, such that the coil 110 is at least partly between the core 150 and the first and/or second parts of the magnetically soft circuit element 160, 170. The first and second parts of the magnetically soft circuit element 160, 170 may also substantially surround the first and second permanent magnets 120, 130.

There may be a bobbin 180 disposed between the coil 110 and the core 150. The coil 110 may be wound around the bobbin 180, and the bobbin 180 may be aligned with and in contact with the core 150. At least part of the bobbin 180 may be received in one or more of the auxiliary magnetic circuit gaps 168, 178 of the first and second parts of the magnetically soft circuit element 160, 170. The bobbin 180 may be supported at one end by the first and second parts of the magnetically soft circuit element 160, 170.

The armature 140 may be located at the second end 114 of the coil 110. The first and second slots 145, 147 of the armature 140 may receive the membrane 4. As will be appreciated by a skilled person, the membrane 4 may be over-moulded onto the armature, in which case the slots may not be required. In this case, the armature may not have the slots 145, 147, and the membrane 4 may be attached to the armature 140 by means of the over-moulding or any other suitable attachment means. The armature 140 may be in contact with the core 150, such that the armature pivot line 142 is aligned with the pivoting axis 152. The armature is pivotable about the armature pivot line 142.

An intermediate position of the armature 140 is shown in figure 1. In this position, the armature 140 may be disposed such that there is a first armature gap 146 defined between the armature first end 143 and the first part of the magnetically soft circuit element 160, and a second armature gap 148 defined between the armature second end 144 and the second part of the magnetically soft circuit element 170. In the intermediate position, the first armature gap 146 and the second armature gap 148 may be the same size.

The intermediate position of the armature 140 is not a stable resting state. In practice, the armature 140 will only move through the intermediate position 140 when moving between latched states, as will be described below.

With the exception of references to first and second ends of the coil, references to "first" and "second" refer to components which correspond to, or positions related to, first and second sides of the axis A. The first side corresponds to the right hand side of the axis A shown in the figures, and the second side corresponds to the left hand side of the axis A shown in the figures.

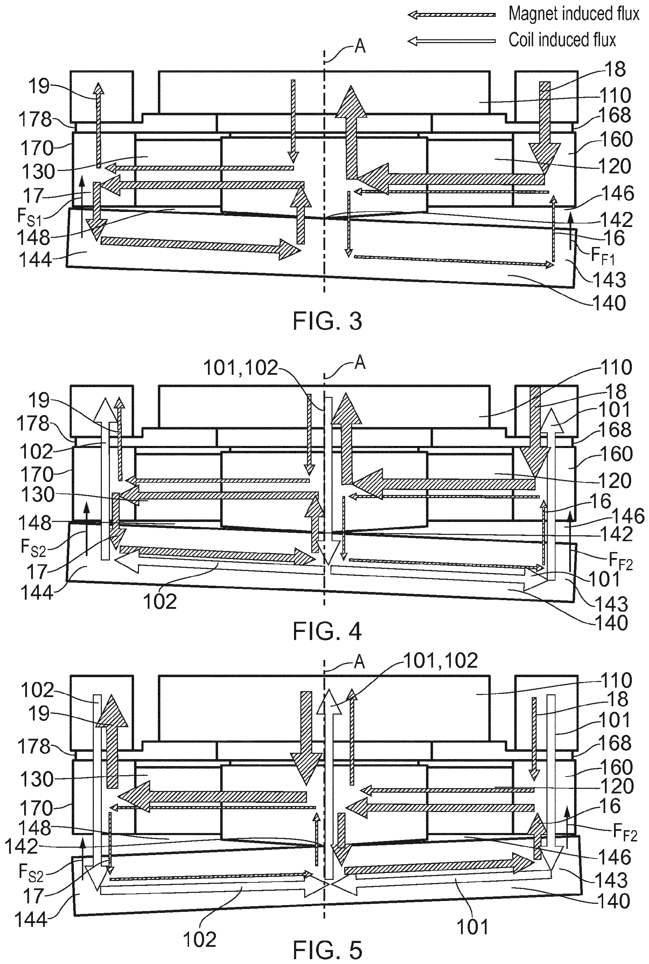

The armature 140 is pivotable between two latched positions: a first latched position (i.e. latched to the right, as shown by the position of the armature 140 in figure 5), and a second latched position (i.e. latched to the left, as shown by the position of the armature 140 in figure 3).

The electromagnetic actuator 100 may comprise an armature magnetic circuit or circuits. As shown in figure 3, the electromagnetic actuator 100 may comprise two armature magnetic circuits: a first armature magnetic circuit and a second armature magnetic circuit.

The first armature magnetic circuit (on the right hand side) may comprise at least part of the armature 140, part of the core 150, the first permanent magnet 120, and at least some of the first part of the magnetically soft circuit element 160. The second armature magnetic circuit (on the left hand side of the axis) may comprise at least part of the armature 140, part of the core 150, the second permanent magnet 130, and at least some of the second part of the magnetically soft circuit element 170. Magnetic flux caused by the magnetic field of the first permanent magnet 120 is established in the first armature magnetic circuit. Similarly, magnetic flux caused by the magnetic field of the second permanent magnet 130 is established in the second armature magnetic circuit. The concentration of magnetic flux through each armature magnetic circuit depends on the size of each armature gap 146, 148. The larger the armature gap 146, 148, the lower the magnetic flux concentration in the respective armature magnetic circuit.

The electromagnetic actuator 100 may also comprise an auxiliary magnetic circuit or circuits. In contrast to the armature magnetic circuits, the auxiliary magnetic circuit or circuits, of which there are two (partly shown) in figure 3, do not include the armature. As shown in figure 3, there may be a first auxiliary magnetic circuit which includes the core 150, the first permanent magnet 120, and the first part of the magnetically soft circuit element 160. There may be a second auxiliary magnetic circuit which includes the core 150, the second permanent magnet 130, and the second part of the magnetically soft circuit element 170.

Magnetic flux 18 caused by the magnetic field of the first permanent magnet 120 is established in the first auxiliary magnetic circuit. Magnetic flux 19 caused by the magnetic field of the second permanent magnet 130 is established in the second auxiliary magnetic circuit. The concentration of magnetic flux through each auxiliary magnetic circuit also depends on the size of each armature gap 146, 148. However, in contrast to the armature magnetic circuits described above, the smaller the armature gap 146, 148, the lower the magnetic flux concentration in the respective auxiliary magnetic circuit.

The auxiliary magnetic circuit gap 168 in which the bobbin 180 may be received, may reduce the concentration of magnetic flux in the first auxiliary magnetic circuit. The auxiliary magnetic circuit gap 168 or bobbin 180 may have a higher reluctance than the first part of the magnetically soft circuit element 160. This may increase the concentration of magnetic flux in the first armature magnetic circuit compared to a first part of the magnetically soft circuit element 160 without an auxiliary magnetic circuit gap 168.

In the same manner as the auxiliary magnetic circuit gap 168, the auxiliary magnetic circuit gap 178 in which the bobbin 180 may be received, may reduce the concentration of magnetic flux in the second auxiliary magnetic circuit. The auxiliary magnetic circuit gap 178 or bobbin 180 may have a higher reluctance than the second part of the magnetically soft circuit element 170. This may cause concentration of magnetic flux in the second armature magnetic circuit compared to a second part of the magnetically soft circuit element 170 without an auxiliary magnetic circuit gap 178.

Preferred arrangements of the actuator 100 have first and second magnetic circuits for latching the armature in its first and second positions, located on opposite sides of a longitudinal axis of the actuator 100. The temporary magnetic flux induced by actuation of the non-permanent magnetisable element preferably incorporates and/or surrounds both of the first and second magnetic circuits to directly influence the magnetic flux in those first and second magnetic circuits by combining to enhance the flux, or conversely opposing to reduce the flux, in either or both of those first and second magnetic circuits which maintain the armature in the first or second positions in the absence of the temporary magnetic flux.

Movement of the armature will now be described with reference to figures 3 to 5. The term "state" refers to either a stable state or transient state of the armature 140. The first and second latched states are stable states, and the first and second transient latched states are not stable states. The armature 140 can remain in a stable state for a prolonged time without external input, however the armature 140 cannot remain in a transient state for a prolonged time.

Figures 3 to 5 show a sequence of movement of the armature 140 from a second position (figure 3) to a first position (figure 5). For consistency with the "first" and "second" sides of the axis described above (right hand side and left hand side of the axis respectively), the second position (shown in figure 3) will be described first.

### Second latched state

Figure 3 shows the armature 140 in a second latched state. In the second latched state, the armature 140 is stable in the second position. In the second position, the armature second end 144 is in contact with or close to the second part of the magnetically soft circuit element 170. The armature 140 is latched and stable in the second position.

The width of the arrows used in figures 3 to 5 represent the relative concentration of magnetic flux in each magnetic circuit. In this position, the flux in the second armature magnetic circuit (represented by arrows 17) is more concentrated than the flux in the first armature magnetic circuit (represented by arrows 16). This is because the armature gap 148 is smaller than the armature gap 146.

The concentration of magnetic flux in the first and second auxiliary magnetic circuits 18, 19 is negatively correlated with the concentration of magnetic flux in the first and second armature magnetic circuits 16, 17. As can be seen by the relative widths of the representative arrows in figure 3, a majority of the magnetic flux caused by the second permanent magnet 130 is concentrated in the second armature magnetic circuit 17. This is partly due to the auxiliary magnetic circuit gap 178 causing a lower concentration of magnetic flux in the second auxiliary magnetic circuit. In contrast, a majority of the flux caused by the first permanent magnet 120 is concentrated in the first auxiliary magnetic circuit. This may be due to the armature gap 146 causing a lower concentration of magnetic flux in the first armature magnetic circuit.

Magnetic flux in the second armature magnetic circuit 17 causes attraction between the armature 140 (specifically, the second end of the armature 144) and the second part of the magnetically soft circuit element 170, and retains the armature 140 in the second position.

This attraction is represented by force Fsi on the armature second end 144 from the flux in the second armature magnetic circuit 17, which is larger than the force F_{F1} on the armature first end 143 from the flux in the first armature magnetic circuit 16.

This means that the armature 140 is retained in this position by the resultant moment, where the resultant moment is: the product of the force Fsi and the distance from the armature second end 144 to the pivot line (acting in a clockwise direction for figures 3 to 5); minus the product of the force F_{F1} and the distance from the armature first end 143 to the pivot line (acting in an anti-clockwise direction for figures 3 to 5).

### Transient second latched state (about to switch)

Figure 4 shows the armature 140 in a transient second latched state. In this state, the armature 140 is in the second position, but about to move to the first position. This state differs from the second latched state in that a non-permanent magnetic field has been applied to the actuator 100 and established a non-permanent magnetic flux in the actuator 100. In the transient second latched state, the armature 140 is about to move to a first latched position.

This non-permanent magnetic field may be generated by activation of the coil 110. The coil 110 may be activated by application of a potential difference to the coil 110, which generates a current along the coil 110 and in turn generates a non-permanent magnetic field, and magnetic flux 101, 102 in first and second outer magnetic circuits (partly shown in figures 4 and 5).

The first outer magnetic circuit may comprise part of the armature 140, the first part of the magnetically soft circuit element 160, and part of the core 150. The second outer magnetic circuit may comprise part of the armature 140, the second part of the magnetically soft circuit element 170, and part of the core 150.

The magnetic flux established in the first outer magnetic circuit is referred to herein as first non-permanent flux (arrows 101), and the magnetic flux established in the second outer magnetic circuit is referred to herein as second non-permanent flux (arrows 102). The non-permanent flux established in the core 150 is common to both the first and second outer magnetic circuits.

In the transient second latched state, the second non-permanent flux 102 opposes the magnetic flux 17 in the second armature magnetic circuit. This is represented by the opposing directions of arrows 17 and 102. As a result of this, the overall magnetic flux between the armature 140 and the second part of the magnetically soft circuit element 170, bridging the armature gap 148, is reduced compared to the flux bridging the armature gap 148 in the second latched state. The attractive force F_{S2} between the armature second end 144 and the second part of the magnetically soft circuit element 170 in the transient second latched state is therefore less than the attractive force F_{S1} between the armature second end 144 and the second part of the magnetically soft circuit element 170 in the second latched state.

In contrast, the first non-permanent flux 101 runs in the same direction as the magnetic flux 16 in the first armature magnetic circuit. This is represented by arrows 16 and 101, which are oriented in the same direction as each other. As a result of this, the overall magnetic flux between the armature 140 and the first part of the magnetically soft circuit element, bridging the armature gap 146, is more concentrated than the flux bridging the armature gap 146 in the second latched state of figure 3. The attractive force F_{F2} between the armature first end 143 and the first part of the magnetically soft circuit element 160 in the transient second latched state of figure 4 is greater than the attractive force F_{F1} between the armature first end 143 and the first part of the magnetically soft circuit element 160 in the second latched state of figure 3, i.e. the summing of the magnetic flux 16 and 101 increases F_{F}.

The armature 140 will switch to a first position when the first force F_{F2} (caused by the sum of the first non-permanent flux and the flux in the first armature magnetic circuit) is larger than the second force F_{S2} (caused by the flux in the second armature magnetic circuit minus the second non-permanent flux).

Switching of the armature 140 from a second position to a first position involves rotation of the armature 140 about the armature pivot line 142 (in an anticlockwise direction for the view shown in figure 4).

As the armature gap 146 is reduced, the magnetic flux concentration in the first armature magnetic circuit increases, which in turn increases the attractive force F_{F2} between the armature first end 143 and the first part of the magnetically soft circuit element 160. This may cause acceleration of the armature 140 towards the first position. The armature 140 will stop rotating once it reaches the first position. In the first position, the armature first end 143 may be in contact with or close to the first part of the magnetically soft circuit element 160.

If the non-permanent magnetic field is removed (for example the coil 110 is deactivated), the armature 140 will be retained in the first latched state, with the armature 140 latched in the first position.

### First latched state

The first latched state is effectively the opposite of the second latched state. The first latched state is not shown in figures 3 to 5, but this state can be represented by a mirror image of the second latched state shown in figure 3.

In the first latched state, the armature 140 is stable in the first position. In the first position, the armature first end 143 is close to or in contact with the first part of the magnetically soft circuit element 160. The armature 140 is latched and stable in the first position.

In this position, the flux in the first armature magnetic circuit 16 is more concentrated than the flux in the second armature magnetic circuit 17. This is because the armature gap 146 is smaller than the armature gap 148.

As before with the second latched state, the concentration of magnetic flux in the first and second auxiliary magnetic circuits 18, 19 is negatively correlated with the magnetic flux in the first and second auxiliary magnetic circuits 16, 17.

In the first latched state, a majority of the flux caused by the first permanent magnet 120 is concentrated in the first armature magnetic circuit. This is partly due to the auxiliary magnetic circuit gap 168 causing a lower concentration of magnetic flux in the first auxiliary magnetic circuit. In contrast, a majority of the flux caused by the second permanent magnet 130 is concentrated in the second auxiliary magnetic circuit. This may be due to the armature gap 148 causing a lower concentration of magnetic flux in the second armature magnetic circuit.

Magnetic flux in the first armature magnetic circuit 16 causes attraction between the armature 140 (specifically, the first end of the armature 143) and the first part of the magnetically soft circuit element 160, and retains the armature 140 in the first position.

The force F_{F1} on the armature first end 143 from the flux in the first armature magnetic circuit 16 is larger than the force Fsi on the armature second end 144 from the flux in the second armature magnetic circuit 17.

This means that the armature 140 is retained in this position by the resultant moment, where the resultant moment is: the product of the force F_{F1} and the distance from the armature first end 143 to the pivot line (acting in an anti-clockwise direction for figures 3 to 5); minus the product of the force Fsi and the distance from the armature second end 144 to the pivot line (acting in a clockwise direction for figures 3 to 5).

### Transient first latched state (about to switch)

The transient first latched state is effectively the reverse of the transient second latched state.

Figure 5 shows the armature 140 in a transient first latched state. In this state, the armature 140 is in the first position, but about to move to the second position. This state differs from the first latched state in that a non-permanent magnetic field has been applied to the actuator and established a non-permanent magnetic flux in the actuator. In the transient first latched state, the armature 140 is about to move to a second latched position.

In the transient first latched state, the non-permanent magnetic field generated is in an opposite direction to the non-permanent magnetic field in the transient second latched state.

This non-permanent magnetic field may be generated by activation of the coil 110. The coil 110 may be activated by application of a potential difference to the coil 110, which generates a current along the coil 110 and in turn generates a non-permanent magnetic field and magnetic flux 101, 102 in the first and second outer magnetic circuits (partly shown in figures 4 and 5).

As described before in the transient second latched state, the first outer magnetic circuit may comprise part of the armature 140, the first part of the magnetically soft circuit element 160, and part of the core 150. The second outer magnetic circuit may comprise part of the armature 140, the second part of the magnetically soft circuit element 170, and part of the core 150. The magnetic flux established in the first outer magnetic circuit is referred to herein as first non-permanent flux (arrows 101), and the magnetic flux established in the second outer magnetic circuit is referred to herein as second non-permanent flux (arrows 102). The non-permanent flux established in the core 150 is common to both the first and second outer magnetic circuits.

In the transient first latched state, the first non-permanent flux 101 opposes the magnetic flux 16 in the first armature magnetic circuit. This is represented by the opposing directions of arrows 16 and 101. As a result of this, the overall magnetic flux between the armature 140 and the first part of the magnetically soft circuit element, bridging the armature gap 146, is reduced compared to the flux bridging the armature gap 146 in the first latched state. The attractive force between the armature first end 143 and the first part of the magnetically soft circuit element 160 is therefore less in the transient first latched state than in the (stable) first latched state.

In contrast, the second non-permanent flux 102 is directed in the same direction as the magnetic flux 17 in the second armature magnetic circuit. This is represented by arrows 17 and 102, which are oriented in the same direction. As a result of this, the overall magnetic flux between the armature 140 and the second part of the magnetically soft circuit element, bridging the armature gap 148, is increased compared to the flux bridging the armature gap 148 in the first latched state. The attractive force F_{S2} between the armature second end 144 and the second part of the magnetically soft circuit element 170 is greater in the transient first latched state than in the (stable) first latched state, i.e. the summing of flux 17 and 102 increases Fs.

The armature 140 will switch to a second position when the second force F_{S2} (caused by the sum of the first non-permanent flux and the flux in the second armature magnetic circuit) is larger than the first force F_{F2} (caused by the flux in the first armature magnetic circuit minus the first non-permanent flux).

Switching of the armature 140 from a first position to a second position involves rotation of the armature 140 about the armature pivot line 142 (in a clockwise direction for the view shown in figure 4).

As the armature gap 148 is reduced, the magnetic flux concentration in the second armature magnetic circuit increases, which in turn increases the attractive force F_{S2} between the armature second end 144 and the second part of the magnetically soft circuit element 170. This may cause acceleration of the armature 140 towards the second position. The armature 140 will stop rotating once it reaches the second position. In the second position, the armature second end 144 may be in contact with or close to the second part of the magnetically soft circuit element 170.

If the non-permanent magnetic field is removed (for example the coil 110 is deactivated), the armature 140 will be retained in a second latched state (shown in figure 3), with the armature 104 in the second latched position.

The arrangement described above with reference to various states has various advantages over known actuators. For example, this arrangement has the advantage of allowing the armature 140 to be maintained in a first or second latched position, without the need for a continuous power supply. This arrangement also has the advantage of allowing easy and quick latching of the armature 140 to one of a first or second position by application of a temporary potential difference to the coil 110, and allowing easy and quick latching of the armature 140 to the other of the first or second position by application of a temporary potential difference in an opposite direction to the coil 110.

Many workable variations in the location of the permanent magnet or magnets are possible. Figures 6 to 15 demonstrate some of these variants.

As will be appreciated from figures 6 to 13, in all embodiments each of the first and second magnetic circuits comprises at least one permanent magnet. In some embodiments, this can be the same permanent magnet comprised in both the first and second magnetic circuits, whereas in others, more than one permanent magnet can each be comprised in a separate magnetic circuit.

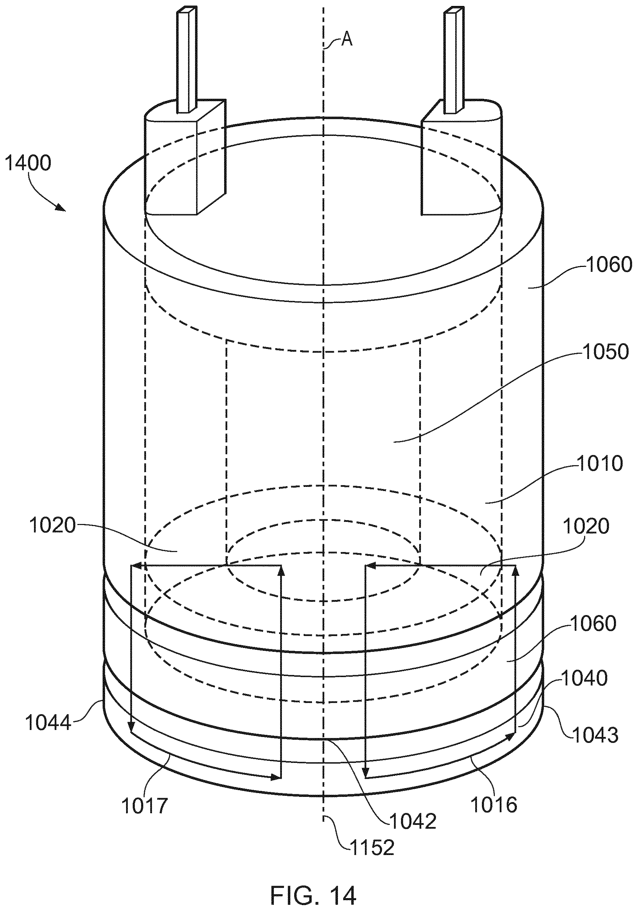

Reference numerals used for features in figures 6 to 14 correspond to features labelled with the same reference numerals in figures 1 and 2, preceded with a number according to each embodiment. For example, the coil "110" of the first embodiment corresponds to the coil "210" of the embodiment shown in figure 6, the coil "310" in figure 7, and so on, up to the coil "1010" in figure 14.

Figure 6 shows an embodiment in which the first permanent magnet 220 is disposed between the armature 240 and the coil 260, and the second permanent magnet 230 is disposed between the armature 240 and the coil 270.

The first permanent magnet 220 may be disposed between the first part of the magnetically soft circuit element 260 and the core 250, and the second permanent magnet 230 may be disposed between the second part of the magnetically soft circuit element 270 and the core 250. Each permanent magnet 220, 230 may be disposed between the coil 210 and the armature 240.

The permanent magnets 220, 230 may be located to opposite sides of the coil 210. The first permanent magnet 220 may be in contact with or close to the first part of the magnetically soft circuit element 260 and the core 250. The second permanent magnet 230 may be in contact with or close to the second part of the magnetically soft circuit element 270 and the core 250.

The permanent magnets 220, 230 may have a residual magnetisation in the same direction. The direction of residual magnetisation may be orthogonal to the axis A. The direction of residual magnetisation may be orthogonal to the axis of pivoting of the armature 252. The permanent magnets 220, 230 may be hard magnets.

The embodiment illustrated in figure 6 corresponds to the arrangements described with reference to figures 2 to 3. As described previously with reference to figures 3 to 5, the first armature magnetic circuit may comprise part of the armature 240, some of the first part of the magnetically soft circuit element 260, the first permanent magnet 220 and part of the core 250.

The second armature magnetic circuit may comprise part of the armature 240, some of the second part of the magnetically soft circuit element 270, the second permanent magnet 230 and part of the core 250. The first outer magnetic circuit may comprise the first part of the magnetically soft circuit element 260, part of the core 250, and part of the armature 240. The second outer magnetic circuit may comprise the second part of the magnetically soft circuit element 270, part of the core 250, and part of the armature 240.

Permanent magnetic flux 216 may be established in the first armature magnetic circuit by the first permanent magnet 220. Permanent magnetic flux 217 may be established in the second armature magnetic circuit by the second permanent magnet 230. Non-permanent magnetic flux may be established in the first and second outer circuits by activation of the coil 210.

Figure 7 shows an embodiment in which the first permanent magnet 320 is disposed between the coil 310 and the first part of the magnetically soft circuit element 360, and the second permanent magnet 330 is disposed between the coil 310 and the second part of the magnetically soft circuit element 370.

The coil 310 is disposed between at least one of the first and second permanent magnets 320, 330 and the armature 340.

The first permanent magnet 320 may be disposed between the first part of the magnetically soft circuit element 360 and the core 350, and the second permanent magnet 330 may be disposed between the second part of the magnetically soft circuit element 370 and the core 350. Each permanent magnet 320, 330 may be disposed between the coil 310 and the armature 340.

The permanent magnets 320, 330 may be located to opposite sides of the coil 310. The first permanent magnet 320 may be in contact with or close to the first part of the magnetically soft circuit element 360 and the core 350. The second permanent magnet 330 may be in contact with or close to the second part of the magnetically soft circuit element 370 and the core 350.

The permanent magnets 320, 330 may have a residual magnetisation in the same direction. The direction of residual magnetisation may be orthogonal to the axis A. The direction of residual magnetisation may be orthogonal to the pivoting axis 352. The permanent magnets 320, 330 may be hard magnets.

The first armature magnetic circuit may comprise part of the armature 340, some of the first part of the magnetically soft circuit element 360, the first permanent magnet 320 and part of the core 350.

The second armature magnetic circuit may comprise part of the armature 340, some of the second part of the magnetically soft circuit element 370, the second permanent magnet 330 and part of the core 350. The first outer magnetic circuit may comprise the first part of the magnetically soft circuit element 360, part of the core 350, and part of the armature 340. The second outer magnetic circuit may comprise the second part of the magnetically soft circuit element 370, part of the core 350, and part of the armature 340.

Permanent magnetic flux 316 may be established in the first armature magnetic circuit by the first permanent magnet 320. Permanent magnetic flux 317 may be established in the second armature magnetic circuit by the second permanent magnet 330. Non-permanent magnetic flux may be established in the first and second outer circuits by activation of the coil 310.

Figure 8 shows an embodiment in which the first permanent magnet 420 is disposed within the first part of the magnetically soft circuit element 460 and the second permanent magnet 430 is disposed within the second part of the magnetically soft circuit element 470.

The first permanent magnet 420 and the second permanent magnet 430 may each be disposed part-way along an axial dimension of the respective first and second part of the magnetically soft circuit element 460, 470. The first permanent magnet 420 and the second permanent magnet 430 may each be disposed mid-way along an axial dimension of the respective first and second parts of the magnetically soft circuit element 460, 470.

The first permanent magnet 420 may be located on an opposite side of the coil 410 to the second permanent magnet 430.

The first and second permanent magnets 420, 430 may each have a shorter radial dimension than the radial dimension of the respective first and second parts of the magnetically soft circuit element 460, 470. The first and second permanent magnets 420, 430 may each have a side which is not in contact with the respective first and second parts of the magnetically soft circuit element 460, 470.

The first permanent magnet 420 and the second permanent magnet 430 may each have opposite residual magnetisation directions to each other. The first permanent magnet 420 may have a residual magnetisation in a direction away from armature 440. The second permanent magnet 430 may have a residual magnetisation direction towards the armature 440.

The first armature magnetic circuit may comprise part of the armature 440, the first part of the magnetically soft circuit element 460, the first permanent magnet 420 and part of the core 450. The second armature magnetic circuit may comprise part of the armature 440, the second part of the magnetically soft circuit element 470, the second permanent magnet 430 and part of the core 450.

The first outer magnetic circuit may comprise the first part of the magnetically soft circuit element 460, part of the core 450, and part of the armature 440. The second outer magnetic circuit may comprise the second part of the magnetically soft circuit element 470, part of the core 450, and part of the armature 440. Permanent magnetic flux 416 may be established in the first armature magnetic circuit by the first permanent magnet 420. Permanent magnetic flux 417 may be established in the second armature magnetic circuit by the second permanent magnet 430. Non-permanent magnetic flux may be established in the first and second outer circuits by activation of the coil 410.

Figure 9 shows an embodiment in which there is only one permanent magnet 520, and the permanent magnet 520 is located in the core 550. The permanent magnet 520 is distal to the armature 540. The permanent magnet 520 may be disposed such that it is symmetrical about the axis A. The permanent magnet 520 may have a residual magnetisation direction that is orthogonal to the axis A. The permanent magnet 520 may have a residual magnetisation direction that is orthogonal to the pivot line 552.

The first armature magnetic circuit may comprise the armature 540, the first part of the magnetically soft circuit element 560, the permanent magnet 520 and part of the core 550.

The second armature magnetic circuit may comprise the armature 540, the second part of the magnetically soft circuit element 570, the permanent magnet 530 and part of the core 550.

The first outer magnetic circuit may comprise the first part of the magnetically soft circuit element 560, part of the core 550, and part of the armature 540. The second outer magnetic circuit may comprise the second part of the magnetically soft circuit element 570, part of the core 550, and part of the armature 540.

Permanent magnetic flux 516 may be established in the first armature magnetic circuit by the permanent magnet 520. Permanent magnetic flux 517 may be established in the second armature magnetic circuit by the permanent magnet 520. Non-permanent magnetic flux may be established in the first and second outer circuits by activation of the coil 510.

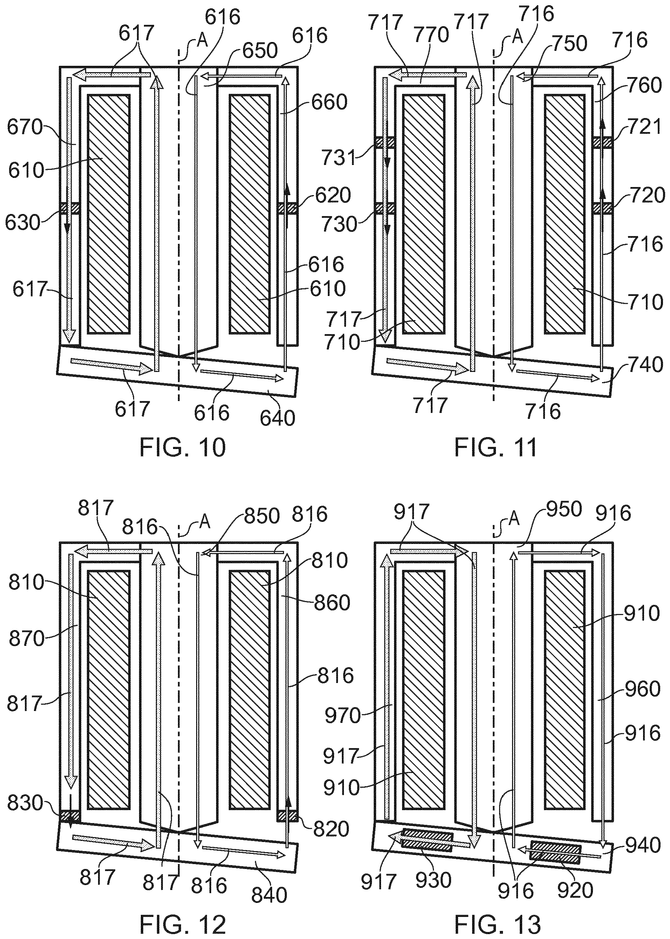

Figure 10 shows an embodiment in which the first permanent magnet 620 is disposed within the first part of the magnetically soft circuit element 660 and the second permanent magnet 630 is disposed within the second part of the magnetically soft circuit element 670.

The first permanent magnet 620 and the second permanent magnet 630 may each be disposed part-way along an axial dimension of the respective first and second parts of the magnetically soft circuit element 660, 670. The first permanent magnet 620 and the second permanent magnet 630 may each be disposed mid-way along an axial dimension of the respective first and second parts of the magnetically soft circuit element 660, 670.

The first permanent magnet 620 may be located on an opposite side of the coil 610 to the second permanent magnet 630.

The first and second permanent magnets 620, 630 may each have the same radial dimension as the radial dimension of the respective first and second parts of the magnetically soft circuit element 660, 670. The first and second permanent magnets 620, 630 may each have two sides which are not in contact with the respective first and second parts of the magnetically soft circuit element 660, 670.

The first permanent magnet 620 and the second permanent magnet 630 may each have opposite residual magnetisation directions to each other. The first permanent magnet 620 may have a residual magnetisation in a direction away from the armature 640. The second permanent magnet 630 may have a residual magnetisation direction towards the armature 640.

The first armature magnetic circuit may comprise part of the armature 640, the first part of the magnetically soft circuit element 660, the first permanent magnet 620 and part of the core 650. The second armature magnetic circuit may comprise part of the armature 640, the second part of the magnetically soft circuit element 670, the second permanent magnet 630 and part of the core 650.

The first outer magnetic circuit may comprise the first part of the magnetically soft circuit element 660, part of the core 650, and part of the armature 640. The second outer magnetic circuit may comprise the second part of the magnetically soft circuit element 670, part of the core 650, and part of the armature 640.

Permanent magnetic flux 616 may be established in the first armature magnetic circuit by the first permanent magnet 620. Permanent magnetic flux 617 may be established in the second armature magnetic circuit by the second permanent magnet 630. Non-permanent magnetic flux may be established in the first and second outer circuits by activation of the coil 610.

Figure 11 shows an embodiment in which the first armature magnetic circuit comprises first and second permanent magnets 720, 721 and the second armature magnetic circuit comprises first and second permanent magnets 730, 731.

The first and second permanent magnets 720, 721 of the first armature magnetic circuit are disposed within the first part of the magnetically soft circuit element 760, and the first and second permanent magnets 730, 731 of the second armature magnetic circuit are disposed within the second part of the magnetically soft circuit element 770.

The first and second permanent magnets 720, 721 of the first armature magnetic circuit are spaced apart from each other in the armature magnetic circuit, and the first and second permanent magnets 730, 731 of the second armature magnetic circuit are spaced apart from each other in the armature magnetic circuit. The first and second permanent magnets 720, 721 of the first armature magnetic circuit are spaced apart from each other along the first part of the magnetically soft circuit element 760. The first and second permanent magnets 730, 731 of the second armature magnetic circuit are spaced apart from each other along the second part of the magnetically soft circuit element 770.

The permanent magnets of the first armature magnetic circuit 720, 721, may be located on an opposite side of the coil 710 to the permanent magnets of the second magnetic circuit 730, 731.

The first and second permanent magnets of each armature magnetic circuit 720, 721, 730, 731, may each have the same radial dimension as the radial dimension of the respective first and second parts of the magnetically soft circuit element 760, 770. The first and second permanent magnets of each armature magnetic circuit 720, 721, 730, 731, may each have two sides which are not in contact with the respective first and second parts of the magnetically soft circuit element 760, 770.

The first permanent magnet of the first armature magnetic circuit 720, may have the same residual magnetisation direction as the second permanent magnet of the first armature magnetic circuit 721.

The first permanent magnet of the second armature magnetic circuit 730, may have the same residual magnetisation direction as the second permanent magnet of the second armature magnetic circuit 731.

The permanent magnets of the first armature magnetic circuit 720, 721, may have an opposite residual magnetisation direction to the permanent magnets of the second armature magnetic circuit 730, 731.

The permanent magnets of the first armature magnetic circuit 720, 721 may have a residual magnetisation in a direction away from the armature 740. The permanent magnets of the second armature magnetic circuit 730, 731, may have a residual magnetisation direction towards the armature 740.

The first armature magnetic circuit may comprise part of the armature 740, the first part of the magnetically soft circuit element 760, the permanent magnets of the first armature magnetic circuit 720, 721 and part of the core 750. The second armature magnetic circuit may comprise part of the armature 740, the second part of the magnetically soft circuit element 770, the permanent magnets of the second armature magnetic circuit 730, 731, and part of the core 750.

The first outer magnetic circuit may comprise the first part of the magnetically soft circuit element 760, part of the core 750, and part of the armature 740. The second outer magnetic circuit may comprise the second part of the magnetically soft circuit element 770, part of the core 750, and part of the armature 740.

Permanent magnetic flux 716 may be established in the first armature magnetic circuit by the permanent magnets 720, 721. Permanent magnetic flux 717 may be established in the second armature magnetic circuit by the second permanent magnet 730, 731. Non-permanent magnetic flux may be established in the first and second outer circuits by activation of the coil 710.

Figure 12 shows an embodiment in which the first permanent magnet 820 is disposed between the armature 840 and the first part of the magnetically soft circuit element 860, and the second permanent magnet 830 is disposed between the armature 840 and the second part of the magnetically soft circuit element 870.

The first permanent magnet 820 and the second permanent magnet 830 may each be disposed proximate to the armature 840. The permanent magnets 820, 830 may be located to opposite sides of the coil 810.

The first and second permanent magnets 820, 830 may each have the same radial dimension as the radial dimension of the respective first and second parts of the magnetically soft circuit element 860, 870. The first and second permanent magnets 820, 830 may each have two sides which are not in contact with the respective first and second parts of the magnetically soft circuit element 860, 870.

The first permanent magnet 820 and the second permanent magnet 830 may each have opposite residual magnetisation directions to each other. The first permanent magnet 820 may have a residual magnetisation in a direction away from the armature 840. The second permanent magnet 830 may have a residual magnetisation direction towards the armature 840.

In the first latched state, the armature 840 may be in contact with or close to the first permanent magnet 820. In the second latched state, the armature 840 may be in contact with or close to the second permanent magnet 830.

The first armature magnetic circuit may comprise part of the armature 840, the first part of the magnetically soft circuit element 860, the first permanent magnet 820 and part of the core 850.

The second armature magnetic circuit may comprise part of the armature 840, the second part of the magnetically soft circuit element 870, the second permanent magnet 830 and part of the core 850.

The first outer magnetic circuit may comprise the first part of the magnetically soft circuit element 860, part of the core 850, and part of the armature 840. The second outer magnetic circuit may comprise the second part of the magnetically soft circuit element 870, part of the core 850, and part of the armature 840.

Permanent magnetic flux 816 may be established in the first armature magnetic circuit by the first permanent magnet 820. Permanent magnetic flux 817 may be established in the second armature magnetic circuit by the second permanent magnet 830. Non-permanent magnetic flux may be established in the first and second outer circuits by activation of the coil 810.

Figure 13 shows an embodiment in which the first permanent magnet 920 and the second permanent magnet 930 are disposed within the armature 940. The

The permanent magnets 920, 930 may have a residual magnetisation in the same direction. The direction of residual magnetisation may be orthogonal to the axis A. The direction of residual magnetisation may be orthogonal to the pivoting axis 952. The permanent magnets 920, 930 may be hard magnets.

The first permanent magnet 920 may be located on an opposite side of the armature pivot line 942 to the second permanent magnet 930.

The first armature magnetic circuit may comprise part of the armature 940, the first part of the magnetically soft circuit element 960, the first permanent magnet 920 and part of the core 950. The second armature magnetic circuit may comprise part of the armature 940, the second part of the magnetically soft circuit element 970, the second permanent magnet 930 and part of the core 950.

The first outer magnetic circuit may comprise the first part of the magnetically soft circuit element 960, part of the core 950, and part of the armature 940. The second outer magnetic circuit may comprise the second part of the magnetically soft circuit element 970, part of the core 950, and part of the armature 940.

Permanent magnetic flux 916 may be established in the first armature magnetic circuit by the first permanent magnet 920. Permanent magnetic flux 917 may be established in the second armature magnetic circuit by the second permanent magnet 930. Non-permanent magnetic flux may be established in the first and second outer circuits by activation of the coil 910.

Figure 14 shows an embodiment in which the actuator is substantially tubular and shows one way in which the actuator may be axisymmetric. The magnetically soft circuit element 1060 defines a cylinder, the cylinder surrounding the coil 1010. The coil 1010 extends along a longitudinal axis A. At one end of the longitudinal axis A, a permanent magnet 1020 is disposed. The permanent magnet 1020 of this embodiment defines a toroid. The armature 1040 is disposed at an opposite side of the permanent magnet 1020 to the coil 1010. The permanent magnet 1020 is magnetised in one direction, such that a magnetic circuit is established. The magnetic circuit comprises at least part of the core 1050, at least part of the magnetically soft circuit element 1060, at least part of the armature 1040 and the permanent magnet 1020. In a similar manner to embodiments described previously, magnetic flux through the first and second magnetic circuits can be established, as illustrated with arrows 1016 and 1017, to latch the armature 1040 in first and second positions, in which its first and second extremities are latched by selectively biasing them toward their respective sides of the magnetically soft circuit element 1060. As will be appreciated, a cross section cut through the device 1400 of Figure 14 would reveal a cross-sectional structure similar to that shown in Figure 6. As with all previous embodiments, a non-permanent magnetic field can be induced by activation of the coil 1050, and this will interact with the first and second magnetic circuits 1016, 1017 as illustrated and described in relation to Figures 3 to 5, to switch the actuator between its first and second latched positions. As with other embodiments, The armature 1040 is arranged to pivot about a pivot line 1042, which is substantially perpendicular to the primary axis A of the coil 1050.

Although a specific form and arrangement of valve sub-assembly is shown in the figures, it will be appreciated that aesthetic changes could be made to the device shown whilst still performing the function of the present invention as defined in the appended claims.

## Claims

1. An electromagnetic actuator (100) comprising:
a non-permanent magnetisable element (110);
one or more permanent magnets (120, 130); and
an armature (140) having a first end (143) and a second end (144), and a pivot axis (152) between the first and second ends (143, 144),
wherein the armature (140) is pivotable about the pivot axis (152), between:
a first position in which the armature (140) is retained by a first magnetic circuit including at least one of the one or more permanent magnets (120, 130) and the armature (140); and
a second position in which the armature (140) is retained by a second magnetic circuit including at least one of the one or more permanent magnets (120, 130) and the armature (140),
wherein the non-permanent magnetisable element (110) is configured such that it can be actuated to generate an opposing magnetic circuit to oppose the first and/or second magnetic circuit to rotate the armature (140) from one of the first and second positions to the other of the first and second positions,
**characterised in that** the non-permanent magnetisable element (110) is configured to generate a first non-permanent magnetic flux (101) in the armature (140) on a first side of the pivot axis (152) and a second non-permanent magnetic flux (102) in the armature (140) on a second side of the pivot axis (152), the first non-permanent magnetic flux (101) being in an opposite direction to the second non-permanent magnetic flux (102).

2. An electromagnetic actuator (100) according to claim 1, wherein the first magnetic circuit comprises the armature (140), a permanent magnet of the one or more permanent magnets (120, 130), and a magnetically soft circuit element (160, 170).

3. An electromagnetic actuator (100) according to claim 1 or claim 2, wherein the second magnetic circuit comprises the armature (140), a permanent magnet of the one or more permanent magnets (120, 130), and a magnetically soft circuit element (160, 170).

4. An electromagnetic actuator (100) according to claim 3, wherein the magnetically soft circuit element (160, 170) of the first magnetic circuit is a first part of a magnetically soft circuit element (160, 170) and the magnetically soft circuit element (160, 170) of the second magnetic circuit is a second part of the same magnetically soft circuit element (160, 170).

5. An electromagnetic actuator (100) according to any preceding claim, wherein the non-permanent magnetisable element (110) surrounds a magnetisable core (150).

6. An electromagnetic actuator (100) according to any preceding claim, wherein the non-permanent magnetisable element (110) is a coil.

7. An electromagnetic actuator (100) according to any preceding claim, wherein the one or more permanent magnets (120, 130) is/are located between the non-permanent magnetisable element (110) and the armature (140).

8. An electromagnetic actuator (100) according to any preceding claim, wherein the first magnetic circuit comprises a first permanent magnet (120) and the second magnetic circuit comprises a second permanent magnet (130).

9. An electromagnetic actuator (100) according to any of claims 4 to 8, wherein the first permanent magnet (120) is disposed between a first part of the magnetically soft circuit element (160, 170) and the core (150) and the second permanent magnet (130) is disposed between a second part of the magnetically soft circuit element (160, 170) and the core (150).

10. An electromagnetic actuator (100) according to any preceding claim, wherein pivoting of the armature (140) between the first and second positions involves rotation of the armature (140) about the pivot axis (152).

11. An electromagnetic actuator (100) according to any of claims 4 to 10, wherein in the first position, the first end (143) of the armature (140) is in contact with or close to the first part of the magnetically soft circuit element (160, 170), and in the second position, the second end (144) of the armature (140) is in contact with or close to the second part of the magnetically soft circuit element (160, 170).

12. An electromagnetic actuator (100) according to any preceding claim, wherein the armature (140) comprises a material with a positive magnetic susceptibility.

13. An electromagnetic actuator (100) according to any preceding claim, wherein the armature (140) comprises steel, preferably steel comprising a ferritic or martensitic phase.

14. A valve (1) comprising an electromagnetic actuator (100) according to any of the preceding claims.

15. A valve (1) according to claim 14, wherein the actuator (100) is configured to actuate at least one seating means of the valve (1) to open a fluid path between a first port (201) and a second port (202) in one of the first and second positions, and to:
close the fluid path between the first port (201) and the second port (202) in the other of the first and second positions; and/or to
open a fluid path between the first port (201) and a third port (203) in the other of the first and second positions.

## Patentansprüche

1. Elektromagnetischer Aktuator (100) mit:
einem nicht permanenten magnetisierbaren Element (110);
einem oder mehreren Permanentmagneten (120, 130); und
einem Anker (140) mit einem ersten Ende (143) und einem zweiten Ende (144) und einer Schwenkachse (152) zwischen dem ersten und dem zweiten Ende (143, 144),
wobei der Anker (140) um die Schwenkachse (152) herum schwenkbar ist zwischen:
einer ersten Position, in welcher der Anker (140) von einem ersten Magnetkreis zurückgehalten wird, der mindestens eines aus dem einen oder den mehreren Permanentmagneten (120, 130) und dem Anker (140) aufweist; und
einer zweiten Position, in welcher der Anker (140) von einem zweiten Magnetkreis zurückgehalten wird, der mindestens eines aus dem einen oder den mehreren Permanentmagneten (120, 130) und dem Anker (140) aufweist,
wobei das nicht permanente magnetisierbare Element (110) derart ausgebildet ist, dass es zum Erzeugen eines entgegengesetzten Magnetkreises betätigt werden kann, um sich dem ersten und/oder dem zweiten Magnetkreis entgegenzusetzen, so dass der Anker (140) aus einer Position aus der ersten und der zweiten Position zu der anderen Position aus der ersten und der zweiten Position gedreht wird,
**dadurch gekennzeichnet, dass**
das nicht permanente magnetisierbare Element (110) dazu ausgebildet ist, einen ersten nicht permanenten magnetischen Fluss (101) in dem Anker (140) auf einer ersten Seite der Schwenkachse (152) zu erzeugen und einen zweiten nicht permanenten magnetischen Fluss (102) in dem Anker (140) auf einer zweiten Seite der Schwenkachse (152) zu erzeugen, wobei der erste nicht permanente magnetische Fluss (101) in einer entgegengesetzten Richtung zu dem zweiten nicht permanenten magnetischen Fluss (102) ist.

2. Elektromagnetischer Aktuator (100) nach Anspruch 1, wobei der erste Magnetkreis den Anker (140), den einen Permanentmagneten (120, 130) oder einen der mehreren Permanentmagnete (120, 130) und ein weichmagnetisches Schaltelement (160, 170) aufweist.

3. Elektromagnetischer Aktuator (100) nach Anspruch 1 oder 2, wobei der zweite Magnetkreis den Anker (140), einen Permanentmagneten aus dem einen oder den mehreren Permanentmagneten (120, 130) und ein weichmagnetisches Schaltelement (160, 170) aufweist.

4. Elektromagnetischer Aktuator (100) nach Anspruch 3, wobei das weichmagnetische Schaltelement (160, 170) des ersten Magnetkreises ein erster Teil eines weichmagnetischen Schaltelements (160, 170) ist und das weichmagnetische Schaltelement (160, 170) des zweiten Magnetkreises ein zweiter Teil des gleichen weichmagnetischen Schaltelements (160, 170) ist.

5. Elektromagnetischer Aktuator (100) nach einem der vorstehenden Ansprüche, wobei das nicht permanente magnetisierbare Element (110) einen magnetisierbaren Kern (150) umgibt.

6. Elektromagnetischer Aktuator (100) nach einem der vorstehenden Ansprüche, wobei das nicht permanente magnetisierbare Element (110) eine Spule ist.

7. Elektromagnetischer Aktuator (100) nach einem der vorstehenden Ansprüche, wobei sich der eine oder die mehreren Permanentmagneten (120, 130) zwischen dem nicht permanenten magnetisierbaren Element (110) und dem Anker (140) befindet/befinden.

8. Elektromagnetischer Aktuator (100) nach einem der vorstehenden Ansprüche, wobei der erste Magnetkreis einen ersten Permanentmagneten (120) aufweist und der zweite Magnetkreis einen zweiten Permanentmagneten (130) aufweist.

9. Elektromagnetischer Aktuator (100) nach einem der Ansprüche 4 bis 8, wobei der erste Permanentmagnet (120) zwischen einem ersten Teil des weichmagnetischen Schaltelements (160, 170) und dem Kern (150) angeordnet ist und der zweite Permanentmagnet (130) zwischen einem zweiten Teil des weichmagnetischen Schaltelements (160, 170) und dem Kern (150) angeordnet ist.

10. Elektromagnetischer Aktuator (100) nach einem der vorstehenden Ansprüche, wobei das Schwenken des Ankers (140) zwischen der ersten und der zweiten Position zu einer Drehung des Ankers (140) um die Schwenkachse (152) herum führt.

11. Elektromagnetischer Aktuator (100) nach einem der Ansprüche 4 bis 10, wobei das erste Ende (143) des Ankers (140) in der ersten Position in Kontakt mit oder in der Nähe von dem ersten Teil des weichmagnetischen Schaltelements (160, 170) ist und das zweite Ende (144) des Ankers (140) in der zweiten Position in Kontakt mit oder in der Nähe von dem zweiten Teil des weichmagnetischen Schaltelements (160, 170) ist.

12. Elektromagnetischer Aktuator (100) nach einem der vorstehenden Ansprüche, wobei der Anker (140) ein Material mit einer positiven magnetischen Suszeptibilität aufweist.

13. Elektromagnetischer Aktuator (100) nach einem der vorstehenden Ansprüche, wobei der Anker (140) Stahl aufweist, vorzugsweise Stahl mit einer ferritischen oder martensitischen Phase.

14. Ventil (1) mit einem elektromagnetischen Aktuator (100) nach einem der vorstehenden Ansprüche.

15. Ventil (1) nach Anspruch 14, wobei der Aktuator (100) ausgebildet ist, um mindestens eine Sitz-Vorrichtung des Ventils (1) zum Öffnen eines Fluidwegs zwischen einem ersten Port (201) und einem zweiten Port (202) in der ersten und der zweiten Position zu betätigen und zum:
Schließen des Fluidwegs zwischen dem ersten Port (201) und dem zweiten Port (202) in der jeweils anderen der ersten und der zweiten Position; und/ oder
Öffnen eines Fluidwegs zwischen dem ersten Port (201) und einem dritten Port (203) in der jeweils anderen der ersten und der zweiten Position.

## Revendications

1. Actionneur électromagnétique (100) comprenant :
un élément magnétisable de façon non permanente (110),
au moins un aimant permanent (120, 130), et
un induit (140) ayant une première extrémité (143) et une seconde extrémité (144) ainsi qu'un axe de pivotement (152) situé entre la première extrémité et la seconde extrémité (143, 144),
l'induit (140) étant susceptible de pivoter autour de l'axe de pivotement (152) entre :
une première position dans laquelle l'induit (140) est maintenu par un premier circuit magnétique comprenant au moins l'un des aimants permanents (120, 130) et l'induit (140), et
une seconde position dans laquelle l'induit (140) est maintenu par un second circuit magnétique comprenant au moins l'un des aimants permanents (120, 130) et l'induit (140),
l'élément (110) magnétisable de façon non permanente étant conformé de façon à pouvoir à être actionné pour créer un circuit magnétique d'opposition s'opposant au premier circuit magnétique et/ou au second circuit magnétique pour faire tourner l'induit (140) à partir d'une position parmi la première position et la seconde position vers l'autre de ces positions parmi la première position et la seconde position,
**caractérisé en ce que**
le circuit (110) pouvant être magnétisé de façon non permanente est conformé de façon à générer un premier flux magnétique non permanent (101) dans l'induit (140) sur un premier côté de l'axe de pivotement (152) et un second flux magnétique non permanent (102) dans l'induit
(140) sur un second côté de l'axe de pivotement (152), le premier flux magnétique non permanent (101) étant orienté dans une direction opposée à celle du second flux magnétique non permanent (102).

2. Actionneur électromagnétique (100) conforme à la revendication 1, dans lequel le premier circuit magnétique comporte l'induit (140), un aimant permanent parmi le ou les aimant(s) permanent(s) (120, 130) et un élément de circuit magnétiquement doux (160, 170).

3. Elément électromagnétique (100) conforme à la revendication 1 ou 2, dans lequel le second circuit magnétique comporte l'induit (140), un aimant permanent parmi le ou les aimant(s) permanent(s) (120, 130) et un élément de circuit magnétiquement doux (160, 170).

4. Actionneur électromagnétique (100) conforme à la revendication 3, dans lequel l'élément de circuit magnétiquement doux (160, 170) du premier circuit magnétique est une première partie d'un élément de circuit magnétiquement doux (160, 170) et l'élément de circuit magnétiquement doux (160, 170) du second circuit magnétique est une seconde partie du même élément magnétiquement doux (160, 170).

5. Actionneur électromagnétique (100) conforme à l'une quelconque des revendications précédentes,
dans lequel l'élément magnétisable de façon non permanente (110) entoure un noyau magnétisable (150).

6. Actionneur électromagnétique (100) conforme à l'une quelconque des revendications précédentes,
dans lequel l'élément magnétisable de façon non permanente (110) est une bobine.

7. Actionneur électromagnétique (100) conforme à l'une quelconque des revendications précédentes,
dans lequel le ou les aimant(s) permanent(s) (120, 130) est(sont) situé(s) entre l'élément magnétisable de façon non permanente (110) et l'induit (140).

8. Actionneur électromagnétique (100) conforme à l'une quelconque des revendications précédentes,
dans lequel le premier circuit magnétique comporte un premier élément permanent (120) et le second circuit magnétique comporte un second aimant permanent (130).

9. Actionneur électromagnétique (100) conforme à l'une quelconque des revendications 4 à 8,
dans lequel le premier aimant permanent (120) est positionné entre une première partie de l'élément de circuit magnétiquement doux (160, 170) et le noyau (150) et le second aimant permanent (130) est positionné entre une seconde partie de l'élément de circuit magnétiquement doux (160, 170) et le noyau (150).

10. Actionneur électromagnétique (100) conforme à l'une quelconque des revendications précédentes,
dans lequel le pivotement de l'induit (140) entre la première position et la seconde position implique une rotation de l'induit (140) autour de l'axe de pivotement (152).

11. Actionneur électromagnétique (100) conforme à l'une quelconque des revendications 4 à 10,
dans lequel dans la première position, la première extrémité (143) de l'induit (140) est en contact avec ou au voisinage de la première partie de l'élément de circuit magnétiquement doux (160, 170) et dans la seconde position, la seconde extrémité (144) de l'induit (140) est en contact avec ou au voisinage de la seconde partie de l'élément de circuit magnétiquement doux (160, 170).

12. Actionneur électromagnétique (100) conforme à l'une quelconque des revendications précédentes,
dans lequel l'induit (140) renferme un matériau ayant une susceptibilité magnétique positive.

13. Actionneur électromagnétique (100) conforme à l'une quelconque des revendications précédentes,
dans lequel l'induit (140) renferme un acier, de préférence un acier ayant une phase férritique ou martensitique.

14. Soupape (1) comprenant un actionneur électromagnétique (100) conforme à l'une quelconque des revendications précédentes.

15. Soupape (1) conforme à la revendication 14,
dans laquelle l'actionneur (100) est conformé pour actionner au moins un moyen d'étanchéité de la soupape (1) de façon à ouvrir un chemin fluidique entre un premier orifice (201) et un second orifice (202) dans une position parmi la première et la seconde positions, et
à fermer le chemin fluidique entre le premier orifice (201) et le second orifice (202) dans l'autre position parmi la première position et la seconde position, et/ou
à ouvrir un chemin fluidique entre le premier orifice (201) et un troisième orifice (203) dans l'autre position parmi la première position et la seconde position.
